# EUROPÄISCHE PATENTSCHRIFT

(11) **EP 2 060 860 B1**
(45) Veröffentlichungstag und Bekanntmachung des Hinweises auf die Patenterteilung: **23.11.2011**
(21) Anmeldenummer: 08168219.7
(22) Anmeldetag: 03.11.2008
(51) Int. Cl.: F24J 3/08

(54) **Geothermiesonde und Verfahren zu deren Installation**
Geo-thermal probe and method of installing it
Sonde géothermique et son procédé d'installation

(30) Priorität: 14.11.2007 DE 102007054185
(43) Veröffentlichungstag der Anmeldung: 20.05.2009
(73) Patentinhaber: Friedr. Ischebeck GmbH, 58256 Ennepetal (DE)
(72) Erfinder: Herold, Andreas, 99425 Weimar-Taubach (DE); Swiderek, Georg, 85386 Eching (DE); Ischebeck, Ernst Friedrich, 58256 Ennepetal (DE)
(74) Vertreter: Liedtke, Markus

(56) Entgegenhaltungen:
- WO-A1-03/060389
- WO-A2-2007/070905
- DE-A1- 2 948 629
- DE-A1- 3 010 155

## Beschreibung

Die Erfindung betrifft eine Geothermiesonde und ein Verfahren zur Installation einer Geothermiesonde.

Geothermiesonden dienen der Gewinnung von Wärme, die im zugänglichen Teil der Erdkruste gespeichert ist. Wärme in der Erdkruste hat ihren Ursprung in Restwärme aus der Zeit der Erdentstehung, in Wärme aus radioaktiven Zerfallsprozessen und zumindest im oberflächennahen Bereich aus Sonneneinstrahlung und Wärmekontakt mit Luft. Die Bedeutung dieser oberflächennahen Geothermie beim Heizen und Klimatisieren von Wohn- und Nutzgebäuden hat angesichts steigender Energiepreise in den letzten Jahren zugenommen. In 5 m bis 10 m Tiefe weist der Boden praktisch ganzjährig eine Temperatur auf, die dem Jahresmittel der Lufttemperatur des Standortes entspricht. Die Schwankung der Lufttemperatur wirkt sich nur in der Art einer mit steigender Tiefe immer weiter gedämpften Schwingung auf die oberflächennahe Bodentemperatur aus. Geothermiesysteme nutzen diesen Umstand, indem sie große Wärmemengen auch bei relativ geringen Temperaturunterschieden zwischen Boden und Luft mittels Geothermiesonden zum Zwecke des Heizens aus dem Boden entnehmen oder in den Boden zum Zwecke der Klimatisierung abführen. Beim Abführen von Wärme in den Boden wird gleichzeitig das Wärmereservoir für die kommende Heizsaison aufgefüllt. Üblicherweise werden Geothermiesonden installiert, indem eine lotrechte Bohrung mit einem Durchmesser von 200 mm bis 600 mm niedergebracht wird. Anschließend werden ein Vorlaufrohr und ein Rücklaufrohr und die Bohrung verfüllt. Dieses Vorgehen erfordert eine Reihe zeitaufwändiger Arbeitsschritte und bedingt eine geringe energetische Effizienz aufgrund der Verfüllung der Bohrung.

Aus DE 102 02 261 A1 ist eine Geothermiesonde bekannt, umfassend mehrere Segmente eines äußeren Rohres mit einem im äußeren Rohr angeordneten inneren Rohr, einen an einem ersten Ende eines ersten Segmentes angeordneten Sondenfuß, die als einrammbare Sondenspitze ausgebildet ist, und einen an einem zweiten Ende eines der Segmente angeordneten Sondenkopf. Der Sondenkopf dient zum Einströmen oder Ausströmen einer Flüssigkeit und weist einen Vorlaufleitungsanschluss zum Einströmen der Flüssigkeit in das innere Rohr und einen Rücklaufleitungsanschluss zum Ausströmen der Flüssigkeit aus dem äußeren Rohr auf.

Nachteilig ist dabei, dass derartige Geothermiesonden schwer einbringbar und damit in der Regel mit geringer Länge ausführbar sind.

Aus der DE 29 48 629 A1 ist eine Sonde zur Aufnahme von Erdwärme mit einem säulenartig in das Erdreich hineinragenden Rohrkörper bekannt, dessen erdseitiges Ende verschlossen ist und in dessen Innenraum zur Bildung eines Spülmantels ein Innenrohr mit einem gegenüber dem Innendurchmesser des Rohrkörpers kleineren Durchmesser angeordnet ist.

Aus der DE 30 10 155 A1 ist ein Verfahren zur Installation einer Wärmetauscher-Sonde, die in Form eines rohrförmigen Bohrschaftes mit am unteren Ende vorgesehenem, ein Bohrwerkzeug tragendem Bohrkopf durch Angriff einer Bohrantriebseinrichtung unter Einbringung einer Spülflüssigkeit durch den Bohrschaft zum Abtransport des Bohrgutes etwa vertikal in den Erdboden eingetrieben wird. Nach Beendigung des Bohrvorganges wird der rohrförmige Bohrschaft in dem Bohrloch belassen und sein unteres, das Bohrwerkzeug tragendes Ende dicht verschlossen, worauf durch ein im Inneren des Bohrschaftes angeordnetes Innenrohr, dessen Aussenmantel mit dem Innenmantel des Bohrschaftes einen Spaltraum begrenzt, der an seinem unteren Ende mit dem Innenraum des Innenrohres in Verbindung steht, eine Wärmetauscherflüssigkeit geleitet wird die den aus der nach aussen dichten Hintereinanderschaltung von Spaltraum und Innenraum gebildeten Kanal durchfliesst.

Der Erfindung liegt daher die Aufgabe zu Grunde, eine verbesserte Geothermiesonde und ein verbessertes Verfahren zu ihrer Installation anzugeben.

Die Aufgabe wird erfindungsgemäß gelöst durch eine Geothermiesonde nach Anspruch 1 und ein Verfahren zur Installation einer Geothermiesonde nach Anspruch 8.

Vorteilhafte Ausgestaltungen der Erfindung sind Gegenstand der Unteransprüche.

Die erfindungsgemäße Geothermiesonde umfasst mindestens ein Segment eines äußeren Rohres mit mindestens einem im äußeren Rohr angeordneten inneren Rohr, einen an einem ersten Ende eines ersten Segmentes angeordneten Sondenfuß mit einer Bohrkrone und einen an einem zweiten Ende eines der Segmente angeordneten Sondenkopf. Der Sondenkopf weist eine zum äußeren Rohr führende Vorlauföffnung zum Einströmen und/oder Ausströmen von Suspensionen und/oder Flüssigkeiten und mindestens eine zum inneren Rohr führende Rücklauföffnung zum Einströmen und/oder Ausströmen von Suspensionen und/oder Flüssigkeiten auf. Am ersten Ende des ersten Segmentes sind Suspensionen und/oder Flüssigkeiten aus dem äußeren Rohr in das innere Rohr und/oder aus dem inneren Rohr in das äußere Rohr strömbar. Der Sondenfuß weist mindestens eine zur Bohrkrone führende Durchtrittsöffnung auf. Die Bohrkrone weist mindestens eine Austrittsöffnung auf, so dass Suspensionen und/oder Flüssigkeiten aus dem äußeren Rohr über die Durchtrittsöffnung aus der Austrittsöffnung in eine Umgebung des Bohrkopfes ausströmbar sind. Die Durchtrittsöffnung ist reversibel oder irreversibel verschließbar. Erfindungsgemäß ist eine infolge eines Bohrvorganges bei der Installation der Geothermiesonde entstandene Bohrung im Baugrund mit Zementstein ausgefüllt. Dazu wird besonders bevorzugt als Stützflüssigkeit eine Zementdickspülung verwendet, welche in die infolge des Bohrvorganges bei der Installation der Geothermiesonde entstandene Bohrung im Baugrund gefüllt wird und dort anschließend zu Zementstein aushärtet.

Die erfindungsgemäße Geothermiesonde wird erfindungsgemäß installiert mit einem Verfahren, bei dem mindestens das am ersten Ende mit einem Sondenfuß und einer Bohrkrone versehene Segment mittels eines drehschlagenden Bohrgerätes in einen Baugrund gebohrt wird, wobei während des Bohrens eine Stützflüssigkeit, insbesondere eine Zementdickspülung in ein zweites Ende mindestens eines der Segmente eingebracht wird. Die Zementdickspülung, insbesondere mit einem Wasser/Zement-Verhältnis von etwa 0,7 passiert die Durchtrittsöffnung im Sondenfuß und tritt aus der Austrittsöffnung in der Bohrkrone in die Umgebung im Baugrund aus. Bei Erreichen einer vorgegebenen Bohrtiefe wird das Bohren eingestellt und die Durchtrittsöffnung verschlossen. Anschließend wird das innere Rohr in das äußere Rohr eingebracht. Anschließend wird Wasser zumindest solange in das innere Rohr oder das äußere Rohr eingebracht, bis die im inneren Rohr und/oder äußeren Rohr verbliebene Zementdickspülung durch das innere Rohr und/oder äußere Rohr ausgespült ist. Nach der Zementdickspülung kann vor dem Ausspülen zusätzlich das Einpressen eines Wasser-Sand-Gemischs vorgesehen sein. Erfindungsgemäß wird als Stützflüssigkeit eine Zementdickspülung verwendet, welche in die infolge des Bohrvorganges bei der Installation der Geothermiesonde entstandene Bohrung im Baugrund gefüllt wird und dort anschließend zu Zementstein aushärtet.

Schließlich wird das zweite Ende eines der Segmente mit einem Sondenkopf versehen. Während des Bohrens füllt sich die gesamte Umgebung der Geothermiesonde mit der aus der Bohrkrone austretenden Zementdickspülung, wo sie beim Abbinden eine die Geothermiesonde umgebende Zementsteinsäule bildet, die in Abhängigkeit von einem Druck, unter dem die Zementdickspülung eingebracht wird, auch entsprechend tief in die umgebenden Klüfte des Baugrundes vordringt. Die Segmente des äußeren Rohres und der Sondenfuß mit der Bohrkrone dienen gleichermaßen als Bohrgerät, Injektionsrohr und Bewehrungsstab. Nach dem Spülen mit Wasser sind die genannten, in der Bohrung verbliebenen Bauteile als Geothermiesonde nutzbar, indem beispielsweise kaltes Wasser in die Vorlauföffnung gepumpt wird, durch das äußere Rohr bis zum Sondenfuß strömt, während es sich durch die Wärme des umgebenden Baugrundes erwärmt, im Sondenfuß in das innere Rohr und in diesem zur Rücklauföffnung strömt. Vorlauföffnung und Rücklauföffnung sind mit einer Wärmepumpe einer Geothermieanlage verbunden. Dient die Geothermiesonde in der beschriebenen Betriebsart der Gewinnung von Wärme zum Heizen eines Gebäudes so kann sie auch der Abführung von Wärme in den Baugrund zum Zwecke der Klimatisierung eines Gebäudes dienen. In diesem Fall wird warmes Wasser in die Vorlauföffnung gepumpt und abgekühltes aus der Rücklauföffnung entnommen. Das innere Rohr ist bei Bedarf auf einfache Weise austauschbar.

Die im Baugrund installierte erfindungsgemäße Geothermiesonde erfüllt zusätzlich die Funktion eines Ankerpfahls aus der als Bewehrungsstab dienenden Geothermiesonde und dem sie umgebenden Verpresskörper aus Zementstein. Ein solcher Ankerpfahl überträgt Druck- und/oder Zugkräfte im Wesentlichen über Mantelreibung in den Baugrund. Ein wesentlicher Vorteil ist, dass das Niederbringen der Bohrung und die Verrohrung im selben Arbeitsgang stattfinden, wodurch in erheblichem Ausmaß Zeit und Kosten gespart werden können. Vorzugsweise werden an den Baugrund angepasste Bohrkronen verwendet, beispielsweise für Lehmböden, Fels etc. Die beschriebene Geothermiesonde ist vertikal, horizontal oder in einem beliebigen anderen Winkel in einem Baugrund installierbar.

Wenn sie in ihrer Eigenschaft als Ankerpfahl im Wesentlichen Druckkräfte aufzunehmen hat, wird sie im Wesentlichen vertikal installiert. Zur Befestigung von Hängen, Stützmauern, Gründung von Masten, zur Auftriebssicherung und anderen Anwendungen, bei denen Zugkräfte auftreten, kann ein anderer Einbauwinkel sinnvoll sein. Sofern die Geothermiesonde als Ankerpfahl genutzt wird, wird der Sondenkopf vorzugsweise als Pfahlkopf mit der zusätzlichen Funktion der Lasteinleitung als Ankerplatte ausgebildet. Durch die Verwendung als Geothermiesonde und Ankerpfahl werden zusätzlich Kosten eingespart.

Auch das innere Rohr kann in Innenrohrsegmente aufgeteilt sein. Die Innenrohrsegmente können alternativ zum Einbringen des inneren Rohres nach dem Ende des Bohrvorgangs auch zusammen mit den Segmenten des äußeren Rohres bereits während des Bohrens montiert sein. Sie werden dann ebenfalls von der Zementdickspülung durchflossen. Das innere Rohr wird im äußeren Rohr vorzugsweise mit Hilfe von Abstandshaltern zentriert.

In einer bevorzugten Ausführungsform ist die Durchtrittsöffnung kegelförmig gestaltet. Zum Verschließen der Durchtrittsöffnung wird eine Kugel in das äußere Rohr eingeworfen, die in die Durchtrittsöffnung herabsinkt und optional durch Erhöhung eines Druckes der eingebrachten Zementdickspülung dort verpresst wird, so dass die Durchtrittsöffnung auf einfache und kostengünstige Weise verschlossen ist. Ist das innere Rohr bereits während des Bohrens im äußeren Rohr installiert, wird die Kugel durch das innere Rohr eingeworfen. Hierzu müssen die Größe der Durchtrittsöffnung, der Innendurchmesser des inneren Rohres und der Durchmesser der Kugel aufeinander abgestimmt sein.

Vorzugsweise ist das innere Rohr aus Kunststoff, insbesondere PE oder HDPE gebildet. PE weist eine niedrige Wärmeleitfähigkeit auf, so dass das im inneren Rohr zum Sondenkopf fließende, bereits erwärmte Wasser nicht oder nur wenig von dem im äußeren Rohr zum Sondenfuß fließenden, noch nicht erwärmten Wasser abgekühlt wird, so dass der Wirkungsgrad der Geothermiesonde verbessert wird.

Das äußere Rohr ist bevorzugt aus Aluminium gebildet. Aluminium weist eine besonders hohe Wärmeleitfähigkeit auf, so dass das im äußeren Rohr zum Sondenfuß fließende Wasser besonders schnell Wärme aus dem Baugrund aufnehmen kann. Zudem ist Aluminium weniger korrosionsanfällig als andere gebräuchliche Metalle.

Die Wärmeaufnahme und Abgabe des äußeren Rohres kann auch verbessert werden, indem es mit Strukturen zur Oberflächenvergrößerung auf seiner Innenseite und/oder seiner Außenseite versehen wird. Ein auf der Außenseite des äußeren Rohres angebrachtes Außengewinde vereinfacht nicht nur das Verbinden von Segmenten mit Sondenfuß, Sondenkopf oder untereinander, sondern erhöht auch die Reibung zwischen dem äußeren Rohr und dem Verpresskörper und vergrößert zusätzlich die Oberfläche im Interesse eines besseren Wärmeübergangs. Dadurch und durch die Verwendung von Aluminium kann verglichen mit einer herkömmlichen Geothermiesonde eine geringere Bohrtiefe ausreichend sein.

Vorzugsweise ist das erste Ende eines der Segmente mit dem zweiten Ende eines anderen der Segmente mittels einer Kupplungsmutter verbindbar. Alle Segmente benötigen so nur ein durchgehendes Außengewinde oder ein Außengewinde am ersten und zweiten Ende und können auf besonders einfache Weise miteinander verbunden werden.

In einer bevorzugten Ausführungsform sind die Verschraubungen des Außengewindes mit Sondenfuß, Sondenkopf und Kupplungsmuttern selbsthemmend ausgeführt, erfordern also zum Lösen ein signifikantes Drehmoment, so dass zum Verschrauben keine Kontermuttern erforderlich sind.

Beim Installieren einer Geothermiesonde mit mehreren Segmenten wird der Bohrvorgang spätestens dann unterbrochen, wenn das zweite Ende eines der Segmente eine Oberfläche des Baugrundes erreicht. Anschließend wird mindestens ein weiteres Segment mittels mindestens einer Kupplungsmutter an dieses zweite Ende angeschraubt und der Bohrvorgang anschließend fortgesetzt. Auf diese Weise sind Geothermiesonden äußerst variabler Länge realisierbar. Eine größere Länge kann sowohl die Effizienz der Geothermiesonde als auch die Zug- oder Druckfestigkeit des Ankerpfahls verbessern.

Bevorzugt ist der Sondenfuß und/oder der Sondenkopf auf das äußere Rohr aufschraubbar und/oder die Bohrkrone auf den Sondenfuß aufschraubbar, um schnelle Arbeitsabläufe bei der Installation der Geothermiesonde sicherzustellen.

In einer weiteren Ausführungsform ist der Sondenfuß mit der Bohrkrone einteilig gebildet, um den Herstellungs- und Montageaufwand zu verringern.

Vorzugsweise wird der Stützflüssigkeit, insbesondere der Zementdickspülung vor dem Einbringen in das äußere Rohr Kohlenstoff und/oder eine Kohlenstoffverbindung zugesetzt, um die Wärmeleitfähigkeit des Zementsteins zu verbessern und so einen verbesserten Wärmeübergang zwischen dem Baugrund und dem im äußeren Rohr fließenden Wasser zu erreichen. Gleichzeitig verbessert sich der Korrosionsschutz für das äußere Rohr.

Erfindungsgemäß ist die Durchtrittsöffnung mit einem Verschlussventil versehen, mittels dessen die Durchtrittsöffnung abhängig von einem Innendruck der Geothermiesonde verschließbar und/oder passierbar ist. Vorzugsweise öffnet das Verschlussventil dabei bei einem höheren Innendruck, beispielsweise mehr als 10 bar, und schließt bei einem niedrigeren Innendruck, beispielsweise weniger als 2 bar. Auf diese Weise ist die Durchtrittsöffnung zum einen in allen Einbaulagen der Geothermiesonde verschließbar. Zum anderen kann bis zum Abbinden der Stützflüssigkeit in jede beliebigen Bohrtiefe zwischen Stützflüssigkeit und Wasser gewechselt werden, indem die Stützflüssigkeit mit mehr als 10 bar und das Wasser mit einem geringeren Druck eingebracht wird..

Ausführungsbeispiele der Erfindung werden im Folgenden anhand von Zeichnungen näher erläutert.

Darin zeigen:
- Figur 1: eine Seitenansicht einer in einem Baugrund installierten Geother- miesonde,
- Figur 2: eine teilweise längs geschnittene, vergrößerte Seitenansicht eines Abschnitts der Geothermiesonde aus Figur 1,
- Figur 3: einen Längsschnitt eines Sondenkopfes einer Geothermiesonde und
- Figur 4: einen Längsschnitt eines Sondenfußes einer Geothermiesonde.

Einander entsprechende Teile sind in allen Figuren mit den gleichen Bezugszeichen versehen.

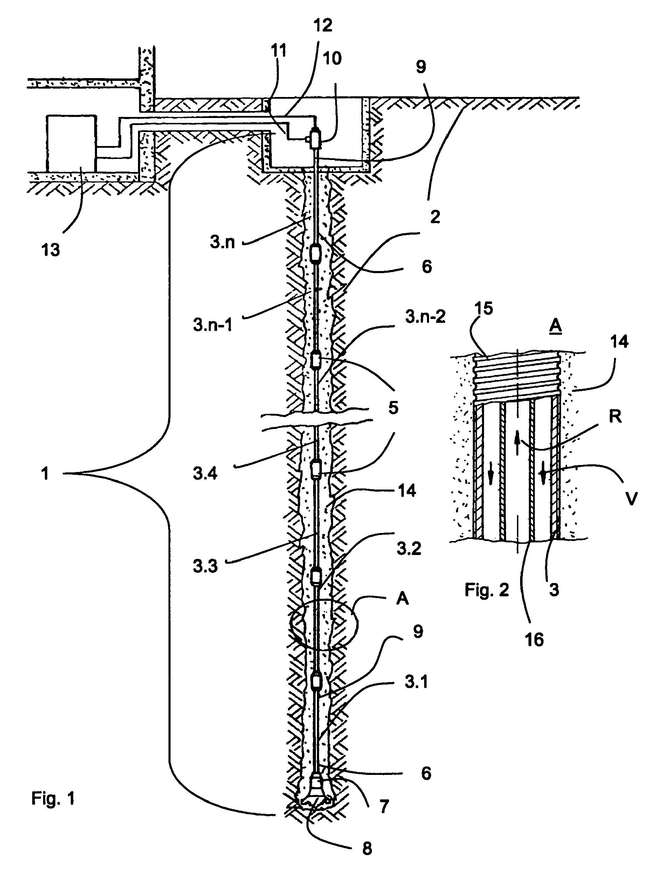

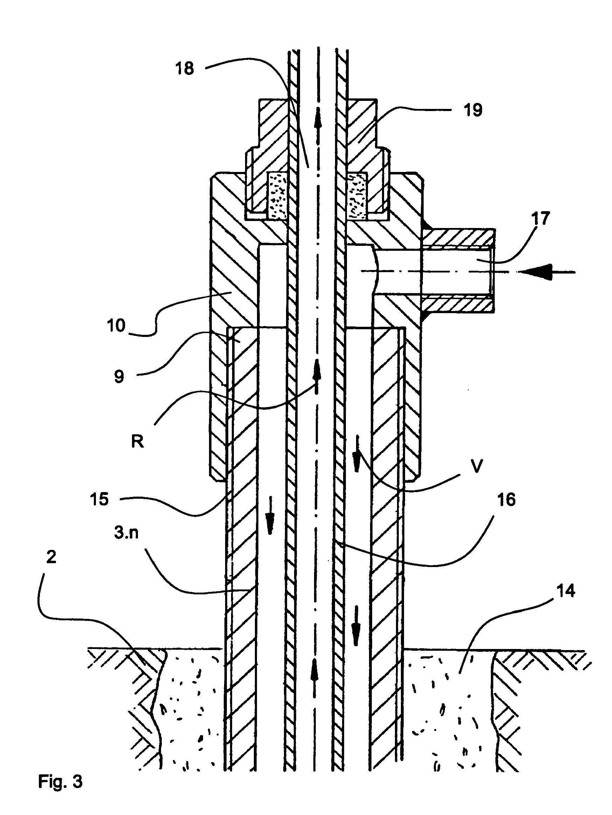

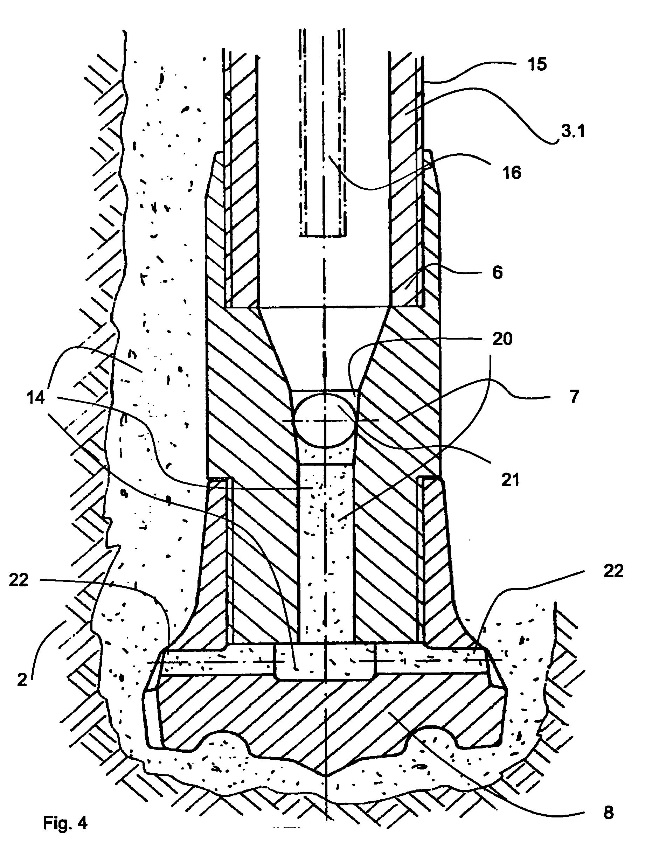

**Figur 1** zeigt eine Geothermiesonde 1, die vertikal in einem Baugrund 2 installiert ist. In dieser Ansicht ist ein in Segmente 3.1 bis 3.n aufgeteiltes äußeres Rohr 3 dargestellt, wobei die Segmente 3.1 bis 3.n mittels Kupplungsmuttern 5 miteinander verbunden sind. Ein Abschnitt A des äußeren Rohres 3 ist teilweise längs geschnitten in Figur 2 dargestellt. An einem ersten Ende 6 des untersten Segments 3.1 ist ein Sondenfuß 7 mit einer Bohrkrone 8 angeordnet, der im Detail in Figur 4 gezeigt wird. An einem zweiten Ende 9 des obersten Segmentes 3.n ist ein Sondenkopf 10 angeordnet, der im Detail in Figur 3 gezeigt wird. Der Sondenkopf 10 ist über eine Vorlaufleitung 11 und eine Rücklaufleitung 12 jeweils in Form einer Schlauch- bzw. Rohrleitung mit einer Wärmepumpe 13 verbunden. Die infolge eines Bohrvorganges bei der Installation der Geothermiesonde 1 entstandene Bohrung im Baugrund 2 ist mit kohlenstoffhaltigem Zementstein 14 aufgefüllt.

**Figur 2** zeigt den Abschnitt A der Geothermiesonde 1 aus Figur 1 im Detail. Das aus Aluminium gebildete äußere Rohr 3 ist auf seiner Außenseite mit einem Außengewinde 15 versehen. Im äußeren Rohr 3 ist ein aus PE gebildetes inneres Rohr 16 angeordnet, welches durch nicht gezeigte Abstandshalter im äußeren Rohr 3 zentriert wird. Die Pfeile in der Darstellung deuten eine Vorlaufrichtung V und eine Rücklaufrichtung R an, in denen die Geothermiesonde 1 im installierten Zustand von Wasser durchströmt wird.

**Figur 3** zeigt den Sondenkopf 10 der Geothermiesonde 1 aus Figur 1. Der Sondenkopf 10 ist auf das Außengewinde 15 des äußeren Rohres 3 aufgeschraubt. Er weist eine zum äußeren Rohr 3 führende Vorlauföffnung 17 und eine zum inneren Rohr 16 führende Rücklauföffnung 18 auf. Im vorliegenden Beispiel wird die Rücklauföffnung 18 durch das nach oben über den Sondekopf hinausragende innere Rohr 16 selbst gebildet. Die Dichtheit des Sondenkopfes (10) wird einerseits beispielsweise mittels einer geeigneten Dichtmasse in der Verschraubung des Sondekopfes 10 auf dem Außengewinde 15 und andererseits mittels einer Stopfbuchse 19 an der Rücklauföffnung sichergestellt. Auch in dieser Darstellung sind die Vorlaufrichtung V und die Rücklaufrichtung R des Wassers mit Pfeilen angedeutet.

**Figur 4** zeigt den Sondenfuß 7 der Geothermiesonde 1 aus Figur 1. Der Sondenfuß 7 ist auf das Außengewinde 15 des äußeren Rohres 3 aufgeschraubt und analog zum Sondenkopf 10 abgedichtet. Auf den Sondenfuß 7 ist die Bohrkrone 8 aufgeschraubt. Eine Durchtrittsöffnung 20 des Sondenfußes 7 ist kegelförmig gebildet und mittels einer Kugel 21 abgedichtet. Der vom äußeren Rohr 3 aus gesehen hinter der Kugel 21 liegende Bereich der Durchtrittsöffnung 20 sowie in der Bohrkrone 8 angeordnete Austrittsöffnungen 22 sind mit Zementstein 14 gefüllt. Das untere Ende des inneren Rohres 16 ist hinreichend weit von der Kugel 21 entfernt, dass Wasser daraus ungehindert in das äußere Rohr 3 oder ungehindert aus dem äußeren Rohr 3 in das innere Rohr 16 einströmen kann.

Die beschriebene Geothermiesonde 1 wird vorzugsweise wie folgt installiert: Das am ersten Ende 6 mit einem Sondenfuß 7 und einer Bohrkrone 8 versehene Segment 3.1 wird mittels eines drehschlagenden Bohrgerätes in den Baugrund 2 gebohrt. Während des Bohrens wird eine mit Kohlenstoff oder Kohlenstoffverbindungen versetzte Stützflüssigkeit, hier eine Zementdickspülung, in das obere, zweite Ende 9 des Segmente eingebracht. Die Zementdickspülung mit einem Wasser/Zement-Verhältnis von etwa 0.7 passiert die Durchtrittsöffnung 20 im Sondenfuß 7 und tritt aus den Austrittsöffnungen 22 der Bohrkrone 8 in die Umgebung im Baugrund 2 aus. Der Bohrvorgang wird unterbrochen, wenn die Bohrkrone 8 soweit im Baugrund 2 vorgerückt ist, dass das zweite Ende 9 in den Bereich der Oberfläche des Baugrundes 2 kommt. Das zweite Ende 9 wird dann mit einer Kupplungsmutter 5 versehen, die auf dem selbsthemmenden Außengewinde 15 keine Kontermutter benötigt. Gegebenenfalls wird die Verschraubung mittels einer Dichtmasse abgedichtet. In gleicher Weise wird ein erstes Ende 6 eines weiteren Segmentes 3.2 bis 3.n in die Kupplungsmutter 5 eingeschraubt und der Bohrvorgang anschließend fortgesetzt. Das Anfügen weiterer Segmente 3.3 bis 3.n erfolgt auf die beschriebene Weise solange, bis die gewünschte Bohrtiefe erreicht ist. Bei Erreichen dieser Bohrtiefe wird das Bohren eingestellt und die Durchtrittsöffnung 20 verschlossen, indem eine Kugel 21 in das äußere Rohr eingeworfen wird. Diese sinkt in die kegelförmige Durchtrittsöffnung 20 und wird durch ein kurzzeitiges Anheben des Drucks der Zementdickspülung darin verpresst. Anschließend wird das innere Rohr 16 in das äußere Rohr 3 eingebracht, Wasser in das innere Rohr 16 gepumpt und die noch im äußeren Rohr 3 befindliche Zementdickspülung herausgespült. Schließlich wird das zweite Ende 9 des noch aus dem Baugrund 2 herausragenden Segments 3.n mit einem Sondenkopf 10 versehen. Im gezeigten Beispiel wird die Rücklauföffnung 18 noch mit einer Stopfbuchse 19 zum Abdichten versehen. Während des Bohrens hat sich das entstandene Bohrloch der Geothermiesonde 1 mit der aus der Bohrkrone 8 austretenden Zementdickspülung gefüllt, wo diese im Verlaufe von typischerweise 4 bis 6 Stunden abbindet und eine die Geothermiesonde 1 umgebende Säule aus Zementstein 14 bildet, die in Abhängigkeit vom Druck, unter dem die Zementdickspülung eingebracht wurde, entsprechend tief in die umgebenden Klüfte des Baugrundes 2 vordringt. Man spricht dabei von einer Infiltrationsverdübelung.

Die so installierte Geothermiesonde 1 wird nun mittels einer Vorlaufleitung 11 und einer Rücklaufleitung 12 an eine Wärmepumpe 13 angeschlossen. Zur Gewinnung von Wärme wird von der Wärmepumpe 13 kaltes Wasser in die Vorlauföffnung 17 gepumpt. Das Wasser strömt im äußeren Rohr 3 in Richtung des Sondenfußes 7. Dabei wird es durch die im Baugrund 2 gespeicherte Wärme erwärmt. Der Wärmeübergang wird dabei durch den kohlenstoffhaltigen Zementstein 14, die durch das Außengewinde 15 vergrößerte Oberfläche des äußeren Rohres 3 und dessen gute Wärmeleitfähigkeit infolge seiner Beschaffenheit aus Aluminium begünstigt. Die Innenseite des äußeren Rohres 3 könnte zur weiteren Verbesserung des Wärmeübergangs ebenfalls so strukturiert sein, dass sich eine vergrößerte Oberfläche ergibt. Das im Bereich des Sondenfußes 7 maximal erwärmte Wasser strömt dort in das innere Rohr 16 und durch dieses nach oben zur Rücklauföffnung 18. Da das innere Rohr 16 aus PE gebildet ist, welches eine geringe Wärmeleitfähigkeit aufweist, gibt das erwärmte Wasser im inneren Rohr 16 nur wenig Wärme an das kühlere Wasser im äußeren Rohr 3 ab.

Soll die Geothermiesonde 1 hingegen zum Abführen von Wärme in den Baugrund benutzt werden, wird von der Wärmepumpe warmes Wasser in die Vorlauföffnung 17 gepumpt. Während es in Richtung des Sondenfußes 7 strömt gibt es infolge der oben beschriebenen, den Wärmeübergang begünstigenden Umstände Wärme an den kühleren Baugrund 2 ab. Das im inneren Rohr 16 aufsteigende, abgekühlte Wasser nimmt wiederum aufgrund der geringen Wärmeleitfähigkeit des inneren Rohres 16 kaum Wärme aus dem wärmeren Wasser im äußeren Rohr 3 auf.

Die installierte Geothermiesonde 1 erfüllt zusätzlich die Funktion eines Ankerpfahls zur Übertragung von Druck- und/oder Zugkräften in den Baugrund.

Die beschriebene Geothermiesonde wurde vertikal installiert, kann jedoch, insbesondere wenn sie als Ankerpfahl auch seitliche Zugkräfte aufnehmen soll, auch horizontal oder in einem beliebigen anderen Winkel installiert werden. Insbesondere in diesem Fall kann die Durchtrittsöffnung 20 mittels eines Verschlussventils verschlossen werden, das abhängig von einem Innendruck der Geothermiesonde 1 verschließbar und/oder passierbar ist. Vorzugsweise öffnet das Verschlussventil bei einem höheren Innendruck, beispielsweise mehr als 10 bar und schließt bei einem niedrigeren Innendruck, beispielsweise weniger als 2 bar. Die Stützflüssigkeit wird mit einem entsprechend hohen Druck eingebracht. Das Wasser zum Spülen mit einem niedrigeren Druck.

Nach dem Einbringen der Stützflüssigkeit, beispielsweise Zementdickspülung, Zementsuspension, Bentonitsuspension kann vor dem Ausspülen ein Wasser-Sand-Gemisch eingepresst werden.

Auch das innere Rohr 16 kann in Innenrohrsegmente aufgeteilt sein. Die Innenrohrsegmente können alternativ zum Einbringen des inneren Rohres 16 nach dem Ende des Bohrvorgangs auch zusammen mit den Segmenten 3.1 bis 3.n des äußeren Rohres 3 bereits während des Bohrens montiert sein. Sie werden dann ebenfalls von der Zementdickspülung durchflossen. Die Innenrohrsegmente können durch Schrauben, Kleben oder Schweißen miteinander verbunden werden.

### BEZUGSZEICHENLISTE

- 1: Geothermiesonde
- 2: Baugrund
- 3.1...3.n: Segment
- 3: Äußeres Rohr
- 5: Kupplungsmutter
- 6: Erstes Ende
- 7: Sondenfuß
- 8: Bohrkrone
- 9: Zweites Ende
- 10: Sondenkopf
- 11: Vorlaufleitung
- 12: Rücklaufleitung
- 13: Wärmepumpe
- 14: Zementstein
- 15: Außengewinde
- 16: Inneres Rohr
- 17: Vorlauföffnung
- 18: Rücklauföffnung
- 19: Stopfbuchse
- 20: Durchtrittsöffnung
- 21: Kugel
- 22: Austrittsöffnung
- A: Abschnitt des äußeren Rohres
- R: Rücklaufrichtung
- V: Vorlaufrichtung

## Patentansprüche

1. Geothermiesonde (1), umfassend mindestens ein Segment (3.1 bis 3.n) eines äußeren Rohres (3) mit mindestens einem im äußeren Rohr (3) angeordneten inneren Rohr (16), einen an einem ersten Ende (6) eines ersten Segmentes (3.1) angeordneten Sondenfuß (7) mit einer Bohrkrone (8) und einen an einem zweiten Ende (9) eines der Segmente (3.1 bis 3.n) angeordneten Sondenkopf (10), wobei der Sondenkopf (10) eine zum äußeren Rohr (3) führende Vorlauföffnung (17) zum Einströmen und/oder Ausströmen von Suspensionen und/oder Flüssigkeiten und mindestens eine zum inneren Rohr (16) führende Rücklauföffnung (18) zum Einströmen und/oder Ausströmen von Suspensionen und/oder Flüssigkeiten aufweist und wobei am ersten Ende (6) des ersten Segmentes (3.1) Suspensionen und/oder Flüssigkeiten aus dem äußeren Rohr (3) in das innere Rohr (16) und/oder aus dem inneren Rohr (16) in das äußere Rohr (3) strömbar sind und wobei der Sondenfuß (7) mindestens eine zur Bohrkrone (8) führende Durchtrittsöffnung (20) aufweist und wobei die Bohrkrone (8) mindestens eine Austrittsöffnung (22) aufweist, so dass Suspensionen und/oder Flüssigkeiten aus dem äußeren Rohr (3) über die Durchtrittsöffnung (20) aus der Austrittsöffnung (22) in eine Umgebung des Bohrkopfes (8) ausströmbar sind und wobei die Durchtrittsöffnung (20) reversibel oder irreversibel verschließbar ist und wobei durch die Austrittsöffnungen (22) eine infolge eines Bohrvorganges bei der Installation der Geothermiesonde (1) entstandene Bohrung im Baugrund (2) mit Zementstein (14) ausgefüllt werden kann, **dadurch gekennzeichnet, dass** die Durchtrittsöffnung (20) mit einem Verschlussventil versehen ist, mittels dessen die Durchtrittsöffnung (20) insbesondere abhängig von einem Innendruck der Geothermiesonde (1) verschließbar und/oder passierbar ist.

2. Geothermiesonde (1) nach Anspruch 1, **dadurch gekennzeichnet, dass** die Durchtrittsöffnung (20) zumindest abschnittsweise kegelförmig gestaltet ist.

3. Geothermiesonden (1) nach einem der vorhergehenden Anspruch, **dadurch gekennzeichnet, dass** das äußere Rohr (3) mit Strukturen zur Oberflächenvergrößerung auf seiner Innenseite und/oder seiner Außenseite versehen ist.

4. Geothermiesonde (1) nach einem der vorhergehenden Ansprüche, **dadurch gekennzeichnet, dass** das äußere Rohr (3) zumindest an den Enden (6, 9) mit einem Außengewinde (15) versehen und wobei das erste Ende (6) mindestens eines der Segmente (3.2 bis 3.n) mit dem zweiten Ende (9) eines benachbarten Segments (3.1 bis 3.n-1) mittels einer Kupplungsmutter (5) verbindbar ist.

5. Geothermiesonde (1) nach einem der vorhergehenden Ansprüche, **dadurch gekennzeichnet, dass** der Sondenfuß (7) und/oder der Sondenkopf (10) auf das äußere Rohr (3) aufschraubbar sind und/oder dass die Bohrkrone (8) auf den Sondenfuß (7) aufschraubbar ist.

6. Geothermiesonde (1) nach einem der Ansprüche 4 oder 5, **dadurch gekennzeichnet, dass** eine Verschraubung des Außengewindes (15) mit der Kupplungsmutter und/oder dem Sondenkopf (10) und/oder dem Sondenfuß (7) und/oder dass eine Verschraubung der Bohrkrone mit dem Sondenfuß selbsthemmend ist.

7. Geothermiesonde (1) nach einem der vorhergehenden Ansprüche, **dadurch gekennzeichnet, dass** das Verschlussventil bei einem höheren Innendruck öffnet und bei einem niedrigeren Innendruck schließt.

8. Verfahren zur Installation einer Geothermiesonde (1), insbesondere nach einem der Ansprüche 1 bis 7, bei dem mindestens ein an einem ersten Ende (6) mit einem Sondenfuß (7) und einer Bohrkrone (8) versehenes Segment (3.1) eines äußeren Rohres (3) in einen Baugrund (2) gebohrt wird, wobei während des Bohrens eine Stützflüssigkeit in ein zweites Ende (9) mindestens eines der Segmente (3.1 bis 3.n) eingebracht wird, welche eine Durchtrittsöffnung (20) im Sondenfuß (7) passiert und aus mindestens einer Austrittsöffnung (22) in der Bohrkrone (8) in eine Umgebung im Baugrund (2) austritt, dass bei Erreichen einer vorgegebenen Bohrtiefe das Bohren eingestellt und die Durchtrittsöffnung (20) verschlossen wird, dass anschließend mindestens ein inneres Rohr (16) in das äußere Rohr (3) eingebracht wird oder dass das innere Rohr (16) in Form eines Innenrohrsegments bereits während des Bohrens im äußeren Rohr (3) angeordnet ist oder wird und dass Wasser zumindest solange in das innere Rohr (16) oder das äußere Rohr (3) eingebracht wird, bis die im inneren Rohr (16) und/oder äußeren Rohr (3) verbliebene Stützflüssigkeit durch das innere Rohr (16) und/oder äußere Rohr (3) ausgespült ist, dass das zweite Ende (9) eines der Segmente (3.1 bis 3.n) mit einem Sondenkopf (10) versehen wird, der eine zum äußeren Rohr (3) führende Vorlauföffnung (17) zum Einströmen und/oder Ausströmen von Suspensionen und/oder Flüssigkeiten und mindestens eine zum inneren Rohr (16) führende Rücklauföffnung (18) zum Einströmen und/oder Ausströmen von Suspensionen und/oder Flüssigkeiten aufweist und wobei als Stützflüssigkeit eine Zementdickspülung verwendet wird, welche in die infolge des Bohrvorganges bei der Installation der Geothermiesonde (1) entstandene Bohrung im Baugrund (2) gefüllt wird und dort anschließend zu Zementstein (14) aushärtet.

9. Verfahren nach Anspruch 8, **dadurch gekennzeichnet, dass** die kegelförmig gestaltete Durchtrittsöffnung (20) mittels einer Kugel (21) verschlossen wird.

10. Verfahren nach Anspruch 9, **dadurch gekennzeichnet, dass** die Kugel (21) durch Erhöhung eines Druckes der eingebrachten Stützflüssigkeit in der Durchtrittsöffnung (20) verpresst wird.

11. Verfahren nach Anspruch 8, **dadurch gekennzeichnet, dass** die Durchtrittsöffnung (20) mittels eines Verschlussventils abhängig von einem Innendruck in der Geothermiesonde (1) verschlossen wird.

12. Verfahren nach einem der Ansprüche 8 bis 11, **dadurch gekennzeichnet, dass** der Bohrvorgang spätestens dann unterbrochen wird, wenn das zweite Ende (9) eines der Segmente (3.1 bis 3.n-1) eine Oberfläche des Baugrundes (2) erreicht, dass anschließend mindestens ein weiteres Segment (3.2 bis 3.n) mittels mindestens einer Kupplungsmutter (5) an dieses zweite Ende (9) angeschraubt wird und dass der Bohrvorgang anschließend fortgesetzt wird.

13. Verfahren nach einem der Ansprüche 8 bis 12, **dadurch gekennzeichnet, dass** der Zementdickspülung Kohlenstoff und/oder Kohlenstoffverbindungen zugesetzt werden.

## Claims

1. Geothermal probe (1), comprising at least one segment (3.1 to 3.n) of an external tube (3) with at least one internal tube (16) arranged inside the external tube (3), one probe foot (7) arranged at a first end (6) of a first segment (3.1) with a drill bit (8), and a probe head (10) arranged at a second end (9) of one of the segments (3.1 to 3.n), while the probe head (10) has a feed line port (17) leading to the external tube (3) for the inflow and/or outflow of suspensions and/or liquids and at least one return line port (18) leading to the internal tube (16) for the inflow and/or outflow of suspensions and/or liquids and while suspensions and/or liquids are flowable from the external tube (3) into the internal tube (16) and/or from the internal tube (16) into the external tube (3) at the first end (6) of the first segment (3.1) and while the probe foot (7) has at least one passage port (20) leading to the drill bit (8) and while the drill bit (8) has at least one outlet port (22) such that suspensions and/or liquids are flowable outwards from the external tube (3) via the passage port (20) from the outlet port (22) into an environment of the drill bit (8) and while the passage port (20) is reversibly or irreversibly closable and while a borehole in the subsoil (2) caused in consequence of a drilling operation during the installation of the geothermal probe (1) may be filled in with cement paste (14) through the outlet ports (22), **characterized in that** the passage port (20) is provided with a closing valve by which the passage port (20) is closable and/or passable depending, in particular, on an internal pressure of the geothermal probe (1).

2. Geothermal probe (1) as claimed in claim 1, **characterized in that** the passage port (20) has a cone-shaped design at least in sections.

3. Geothermal probe (1) as claimed in any of the aforementioned claims, **characterized in that** the external tube (3) is provided with structures for increasing its surface area on its inside and/or on its outside.

4. Geothermal probe (1) as claimed in any of the aforementioned claims, **characterized in that** the external tube (3) is provided with an external thread (15) at least at the ends (6, 9) and while the first end (6) of at least one of the segments (3.2 to 3.n) is connectable with a second end (9) of a neighbouring segment (3.1 to 3.n-1) using a coupling nut (5).

5. Geothermal probe (1) as claimed in any of the aforementioned claims, **characterized in that** the probe foot (7) and/or the probe head (10) are screwable onto the external tube (3) and/or that the drill bit (8) is screwable onto the probe foot (7).

6. Geothermal probe (1) as claimed either in claim 4 or 5, **characterized in that** a screw connection of the external thread (15) with the coupling nut and/or with the probe head (10) and/or with the probe foot (7) and/or that a screw connection of the drill bit with the probe foot is self-locking.

7. Geothermal probe (1) as claimed in any of the aforementioned claims, **characterized in that** the closing valve opens at a higher internal pressure and closes at a lower internal pressure.

8. Procedure for installing a geothermal probe (1) as claimed, in particular, in any claim 1 through 7 in which at least one segment (3.1) provided with a probe foot (7) and a drill bit (8) at least at a first end (7) and belonging to an external tube (3) is drilled into a subsoil (2) while, during drilling, a support fluid is introduced into a second end (9) of at least one of the segments (3.1 to 3.n) which fluid passes through a passage port (20) in the probe foot (7) and emerges from a least one outlet port (22) in the drill bit (8) into an environment in the subsoil (2), that, when reaching a predefined drilling dept, drilling is stopped and the passage port (20) is closed, that, subsequently, at least one internal tube (16) is introduced into the external tube (3) or that the internal tube (16) is or will be arranged in the form of an internal tube segment in the external tube (3) already during drilling, and that water is introduced into the internal tube (16) or the external tube (3) at least until the support fluid remaining in the internal tube (16) and/or external tube (3) has been flushed out, that the second end (9) of one of the segments (3.1 to 3.n) is provided with a probe head (10) which has a feed line port (17) leading to the external tube (3) for the inflow and/or outflow of suspensions and/or fluids and at least one return flow port (18) leading to the internal tube (16) for the inflow and/or outflow of suspensions and/or liquids and while a cement drilling fluid is used as a support fluid which is filled into the borehole created in the subsoil (2) in consequence of the drilling process during the installation of the geothermal probe (1), and which hardens as hardened cement paste at this location subsequently.

9. Procedure as claimed in claim 8, **characterized in that** the passage port (20) having a cone-shaped design is closed by means of a ball (21).

10. Procedure as claimed in claim 9, **characterized in that** the ball (21) is pressed into the passage port (20) by increasing a pressure of the support fluid introduced.

11. Procedure as claimed in claim 8, **characterized in that** the passage port (20) is closed by means of a closing valve, depending on the internal pressure in the geothermal probe (1).

12. Procedure as claimed in any claim 8 through 11, **characterized in that** the drilling process is interrupted by the latest when the second end (9) of one of the segments (3.1 to 3.n-1) reaches a surface of the subsoil (2), that, subsequently, at least one further segment (3.2 to 3.n) is screwed to such second end (9) with at least one coupling nut (5), and that the drilling process is continued thereafter.

13. Procedure as claimed in any claim 8 through 12, **characterized in that** carbon and/or carbon compounds are added to the cement drilling fluid.

## Revendications

1. Sonde géothermique (1), comprenant au moins un segment (3.1 à 3.n) d'un tube extérieur (3) avec au moins un tube intérieur (16) disposé dans le tube extérieur (3), un pied de sonde (7) muni d'un cône de forage (8) disposé à une première extrémité (6) d'un premier segment (3.1), et une tête de sonde (10) disposée à une deuxième extrémité (9) d'un des segments (3.1 à 3.n), où la tête de sonde (10) comporte une ouverture d'amenée (17) menant au tube extérieur (3) pour le flux et/ou le reflux de suspensions et/ou de liquides et au moins une ouverture de retour (18) menant au tube intérieur (16) pour le flux et/ou le reflux de suspensions et/ou de liquides, où, à la première extrémité (6) du premier segment (3.1), des suspensions et/ou des liquides peuvent être refoulés du tube extérieur (3) vers le tube intérieur (16) et/ou du tube intérieur (16) vers le tube extérieur (3), où le pied de sonde (7) comporte au moins une ouverture de passage (20) menant au cône de forage (8), où le cône de forage (8) comporte au moins une ouverture de sortie (22), de telle manière que des suspensions et/ou des liquides peuvent être refoulés du tube extérieur (3) par l'ouverture de passage (20) et de l'ouverture de sortie (22) vers l'environnement du cône de forage (8), où l'ouverture de passage (20) est obturable de manière réversible ou irréversible, et où le trou de sonde formé dans le sol (2) suite à un forage lors de l'installation de la sonde géothermique (1) peut être comblé par de la pâte de ciment (14) par les ouvertures de sortie (22), **caractérisée en ce que** l'ouverture de passage (20) est pourvue d'une vanne d'obturation au moyen de laquelle l'ouverture de passage (20) peut être obturée et/ou dégagée, notamment en fonction d'une pression intérieure de la sonde géothermique (1).

2. Sonde géothermique (1) selon la revendication 1, **caractérisée en ce que** l'ouverture de passage (20) est au moins partiellement réalisée avec une forme conique.

3. Sonde géothermique (1) selon l'une des revendications précédentes, **caractérisée en ce que** le tube extérieur (3) est pourvu de structures pour un agrandissement de surface sur sa face intérieure et/ou sa face extérieure.

4. Sonde géothermique (1) selon l'une des revendications précédentes, **caractérisée en ce que** le tube extérieur (3) est pourvu d'un filet mâle (15), au moins aux extrémités (6, 9), et **en ce que** la première extrémité (6) d'au moins un des segments (3.2 à 3.n) peut être raccordée à la deuxième extrémité (9) d'un segment contigu (3.1 à 3.n-1) au moyen d'un écrou d'accouplement (5).

5. Sonde géothermique (1) selon l'une des revendications précédentes, **caractérisée en ce que** le pied de sonde (7) et/ou la tête de sonde (10) sont vissables sur le tube extérieur (3) et/ou **en ce que** le cône de forage (8) est vissable sur le pied de sonde (7).

6. Sonde géothermique (1) selon l'une des revendications 4 ou 5, **caractérisée en ce qu'**une connexion vissée du filet mâle (15) avec l'écrou d'accouplement et/ou la tête de sonde (10) et/ou le pied de sonde (7), et/ou **en ce qu'**une connexion vissée du cône de forage avec le pied de sonde sont autobloquantes.

7. Sonde géothermique (1) selon l'une des revendications précédentes, **caractérisée en ce que** la vanne d'obturation s'ouvre en cas de pression intérieure élevée et se ferme en cas de pression intérieure faible.

8. Procédé pour l'installation d'une sonde géothermique (1), en particulier selon l'une des revendications 1 à 7, où au moins un segment (3.1) d'un tube extérieur (3) pourvu à une première extrémité (6) d'un pied de sonde (7) et d'un cône de forage (8) est foré dans un sol (2), où, en cours de forage, un liquide de soutien est introduit à une deuxième extrémité (9) d'au moins un des segments (3.1 à 3.n), lequel traverse une ouverture de passage (20) dans le pied de sonde (7) et sort vers un environnement dans le sol (2) par au moins une ouverture de sortie (22) dans le cône de forage (8), où le forage est arrêté une fois atteinte une profondeur de forage définie et l'ouverture de passage (20) obturée, où au moins un tube intérieur (16) est ensuite introduit dans le tube extérieur (3) ou le tube intérieur (16), ou bien où le tube intérieur (16) est déjà disposé ou sera disposé dans le tube extérieur (3) sous la forme d'un segment de tube intérieur pendant le forage, où de l'eau est introduite dans le tube intérieur (16) ou le tube extérieur (3) au moins jusqu'à ce que le liquide de soutien resté dans le tube intérieur (16) et/ou le tube extérieur (3) soit chassé du tube intérieur (16) et/ou du tube extérieur (3), où la deuxième extrémité (9) d'un des segments (3.1 à 3.n) est pourvue d'une tête de sonde (10) comportant une ouverture d'amenée (17) menant au tube extérieur (3) pour le flux et/ou le reflux de suspensions et/ou de liquides et au moins une ouverture de retour (18) menant au tube intérieur (16) pour le flux et/ou le reflux de suspensions et/ou de liquides, et où un fluide de forage au ciment est utilisé comme liquide de soutien, lequel est versé dans le trou de sonde formé dans le sol (2) suite au forage lors de l'installation de la sonde géothermique (1) et durcit ensuit pour former du ciment (14).

9. Procédé selon la revendication 8, **caractérisé en ce que** l'ouverture de passage (20) en forme de cône est obturée au moyen d'une sphère (21).

10. Procédé selon la revendication 9, **caractérisé en ce que** la sphère (21) est serrée par augmentation de pression du liquide de soutien introduit dans l'ouverture de passage (20).

11. Procédé selon la revendication 8, **caractérisé en ce que** l'ouverture de passage (20) est obturée au moyen d'une vanne d'obturation en fonction d'une pression intérieure de la sonde géothermique (1).

12. Procédé selon l'une des revendications 8 à 11, **caractérisé en ce que** le forage est interrompu au plus tard lorsque la deuxième extrémité (9) d'un des segments (3.1 à 3.n-1) atteint une surface du sol (2), **en ce qu'**au moins un autre segment (3.2 à 3.n) est alors vissé sur cette deuxième extrémité (9) au moyen d'au moins un écrou d'accouplement (5), et **en ce que** le forage est poursuivi ensuite.

13. Procédé selon l'une des revendications 8 à 12, **caractérisé en ce que** du carbone et/ou des composés de carbone sont ajoutés au fluide de forage au ciment.
